Europäisches Patentamt

European Patent Office

Office européen des brevets

(11) Veröffentlichungsnummer: **0 266 666**
**A2**

(12) # EUROPÄISCHE PATENTANMELDUNG

(21) Anmeldenummer: 87115811.9

(22) Anmeldetag: 28.10.87

(51) Int. Cl.⁴: **B65G 1/02**

(30) Priorität: 30.10.86 DE 3636917

(43) Veröffentlichungstag der Anmeldung:
**11.05.88 Patentblatt 88/19**

(84) Benannte Vertragsstaaten:
**AT BE CH FR GB IT LI LU NL SE**

(71) Anmelder: **Kranert, Werner**
**Ravensburger Strasse 102**
**D-5000 Köln 60(DE)**

(72) Erfinder: **Kranert, Werner**
**Ravensburger Strasse 102**
**D-5000 Köln 60(DE)**

(54) **Regal.**

(57) Die Regale mit mehreren untereinander angeordneten Kastenelementen werden an der Stirnseite außen mit einer Bodenplatte versehen, auf denen die Kastenelemente aus dem Regal heraus- und nach dort wieder zurückgezogen, darüber auch seitlich verschoben werden können. So läßt sich ein Nebeneinander mehrerer Kästen gleichzeitig zum Be-und Entladen auf der Zusatzplatte erreichen.

Außerdem bietet die Anordnung die Möglichkeit, durch Hochstellen sämtlicher Zusatzplatten die Stirnseite des Regals vollständig abzudecken.

FIGUR 3

EP 0 266 666 A2

## Regal

Es ist bekannt, die Kastenelemente in Regalen mehrfach hintereinander anzuordnen und durch Führungen so beweglich zu halten, daß sie sich vor und zurück und zusätzlich seitlich in einen dafür vorgesehenen Leerraum bewegen lassen. Hierdurch läßt sich jedes der Kastenelemente an die Stirnseite des Regals verschieben. Bei einer solch notwendigen Verschiebung mehrerer Kastenelemente, beispielsweise bei wechselseitiger Inanspruchnahme entgegengesetzter Elemente, wird jedoch viel Zeitaufwand benötigt. Überdies läßt jede Anwendung nur die Freistellung eines einzigen Kastenelements an die Stirnseite des Regals zu.

Demgegenüber macht sich die Erfindung zur Aufgabe, die hintereinander angeordneten Elemente in Schienen und auf Rollen so zu bewegen, daß sie freigestellt in beliebiger Reihenfolge gleichzeitig be-und entladen werden können.

Diese Aufgabe wird erfindungsgemäß dadurch gelöst, daß jede Bodenplatte außen an der Stirnseite des Regals zusätzlich durch eine Platte ergänzt wird. Sie ist mit dem Regal durch Scharniere verbunden. Diese bewegliche Anordnung bietet die Möglichkeit einer waage-und senkrechten Stellung dieser Zusatzplatte zu der Bodenplatte.

In ihrer waagerechten Lage ist die Zusatzplatte als Tragevorrichtung vorgesehen, so daß die hintereinander angeordneten Kastenelemente aus dem Regal heraus-und nach dort wieder zurückgezogen, darüber aber auch seitlich verschoben werden können. So läßt sich ein Nebeneinander mehrerer Kästen gleichzeitig auf der Zusatzplatte erreichen.

Eine Senkrechtstellung durch Hochklappen der Zusatzplatten ist erforderlich, soweit sie in waagerechter Lage ein Bedienen der Kastenelemente behindern.

Außerdem bietet diese Anordnung erfindungsgemäß weiterhin die Möglichkeit, durch Hochstellen sämtlicher Zusatzplatten die Stirnseite des Regals völlig abzudecken und darüber hinaus durch zusätzliche Einrichtungen verschlußsicher zu gestalten.

Ein Aufführungsbeispiel der Erfindung ist in der Zeichnung dargestellt und wird im folgenden näher beschrieben.

Es zeigen

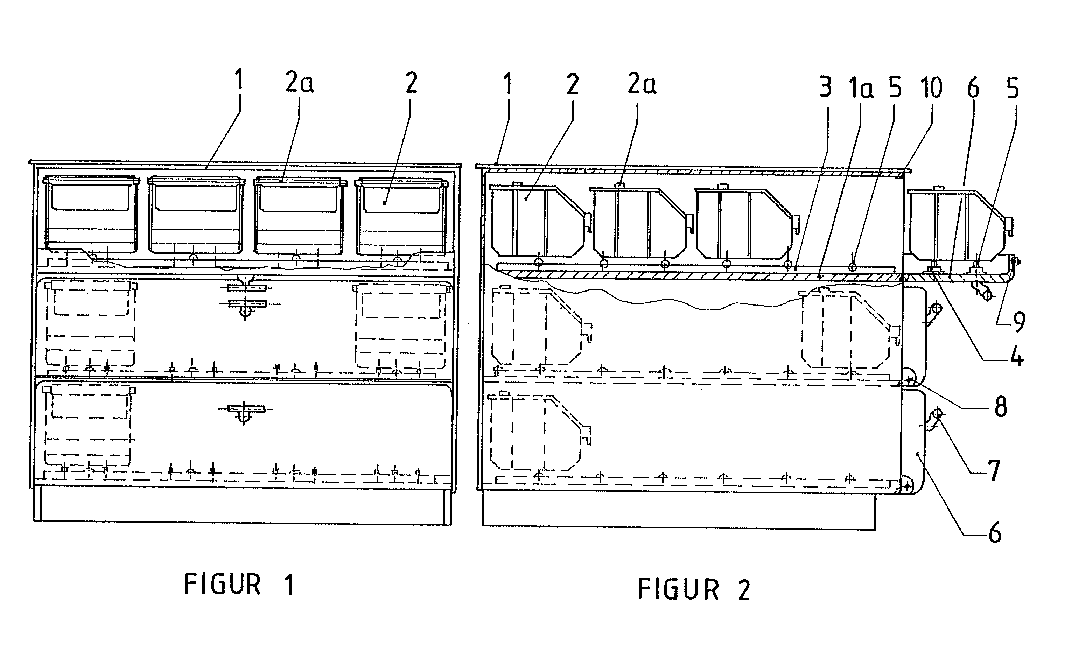

Fig. 1 eine Schrankwand des Regals (1) und nebeneinander angeordnete Kastenelemente (2) mit ihren Bügelgriffen (2a).

Fig. 2 in Seitenansicht drei hintereinander angeordnete Kastenelemente (2) auf der obersten Bodenplatte (1a) des Regals, die sich auf Schienen (3) und Rollen (5) bewegen lassen. Außerdem wird hier eine Zusatzplatte (6) mit ihren Querschienen (4) gezeigt, auf die ein Kastenelement (2) vorgezogen wurde. Bei den beiden unteren Bodenplatten sind die Zusatzplatten (6) in hochgeklapptem Zustand mit den zugehörigen Schrankgriffen (7) und Scharnieren (8) dargestellt.

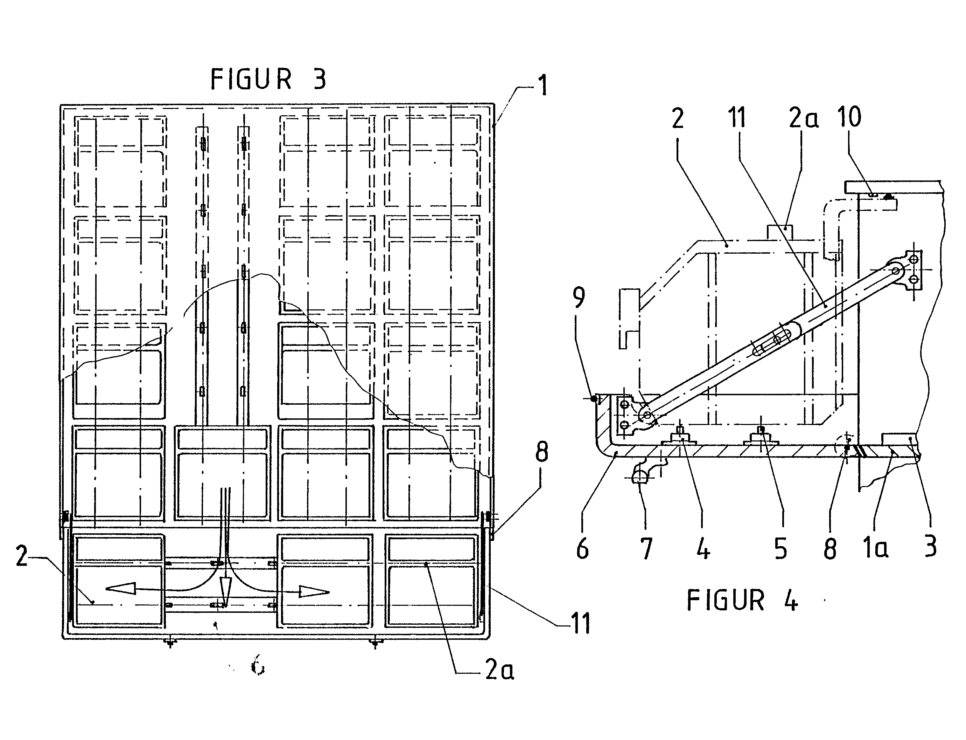

Fig. 3 die seitliche Verschieung dreier Kastenelemente (2) auf die Zusatzplatte (6). Letztere wird an Scharnieren (8) und in ihrer horizontalen Lage durch Stützriegel (11) gehalten.

Fig. 4 zeigt zusätzlich die Zusatzplatte (6) als Trageplatte mit ihrem Stützriegel (11) sowie insbesondere eine Sicherung der hochgeklappten Zusatzplatte (6) durch Schließkugel (9) und Raster (10).

## Ansprüche

1. Regal mit mehreren hintereinander angeordneten Kastenelementen, dadurch gekennzeichnet, daß an seiner Stirnseite außen an der Bodenplatte eine Zusatzplatte angebracht ist, die mit dem Regal durch Scharniere verbunden ist, und in ihrer waagerechten Lage als Trageplatte für die aus dem Regal nach vorn gezogenen Kastenelemente beansprucht wird.

2. Regal nach Anspruch 1, dadurch gekennzeichnet, daß Boden-und Zusatzplatte mit Schinen und Rollen ausgestattet sind.

3. Regal nach Anspruch 1 und 2, dadurch gekennzeichnet, daß die Zusatzplatte in ihrer waagerechten Lage als Trageplatte für die aus dem Regal nach vorn gezogenen Kastenelemente beansprucht wird.

4. Regal nach Anspruch 1 bis 3, dadurch gekennzeichnet, daß die Schienen auf der Zusatzplatte rechtwinkelig zu den Schienen auf der Bodenplatte angeordnet sind.

5. Regal nach Anspruch 1 bis 3, dadurch gekennzeichnet, daß die Schienen auf der Zusatzplatte kurvenförmig verlaufen.

6. Regal nach Anspruch 1, dadruch gekennzeichnet, daß die hochgeklappten Zusatzplatten die Stirnseite des Regals abdecken.

7. Regal nach Anspruch 6, dadurch gekennzeichnet, daß die Zusatzplatte mit Verschlußvorrichtungen versehen ist.

1    2a    2                          1    2    2a                      3  1a  5  10    6    5

FIGUR 1                                FIGUR 2

9

4

8

7

6

0 266 666

FIGUR 3

1

8

2

2a

11

6

FIGUR 4

2    11    2a    10

9

6    7    4    5    8    1a    3

0 266 666